(19) **Europäisches Patentamt / European Patent Office / Office européen des brevets**

(11) **EP 4 628 369 A1**

(12) **EUROPEAN PATENT APPLICATION**
published in accordance with Art. 153(4) EPC

(43) Date of publication:
08.10.2025 Bulletin 2025/41

(21) Application number: 23897853.0

(22) Date of filing: 30.11.2023

(51) International Patent Classification (IPC):
*B60S 1/38* (2006.01)          *B60S 1/62* (2006.01)
*C08G 18/00* (2006.01)          *C08G 18/65* (2006.01)
*C08J 5/00* (2006.01)

(52) Cooperative Patent Classification (CPC):
B60S 1/38; B60S 1/62; C08G 18/00; C08G 18/65;
C08J 5/00

(86) International application number:
PCT/JP2023/042839

(87) International publication number:
WO 2024/117207 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.12.2022  JP 2022193728
12.09.2023  JP 2023147538

(71) Applicant: CANON KABUSHIKI KAISHA
Tokyo 146-8501 (JP)

(72) Inventors:
• MATSUDA, Hidekazu
Tokyo 146-8501 (JP)
• SEGAWA, Shota
Tokyo 146-8501 (JP)
• AOYAMA, Takehiko
Tokyo 146-8501 (JP)
• KODAMA, Katsuya
Tokyo 146-8501 (JP)

(74) Representative: TBK
Bavariaring 4-6
80336 München (DE)

(54) **BLADE RUBBER, WIPER BLADE AND WIPER DEVICE, AND URETHANE MOLDED BODY**

(57) This blade rubber has a high level of an ability to follow various shapes of surfaces to be wiped and excellent wiping performance. In a blade rubber that is made of an elastic member containing polyurethane and cleans the surface of a member to be cleaned by bringing a part of the elastic member into contact with the surface of the member to be cleaned, when the storage elastic modulus of the blade rubber at a vibration frequency of $1 \times 10^{-3}$ Hz in an environment of 8°C is E'(1), and the storage elastic modulus at a vibration frequency of $1 \times 10^{4}$ Hz is E'(2), E'(1) is 12.0 to 18.0 MPa, and E'(2) is 530 to 1500 MPa.

Fig. 1

EP 4 628 369 A1

**Description**

TECHNICAL FIELD

The present disclosure relates to a blade rubber, a wiper blade, and a wiper device, and an urethane molded body that wipe the surface of a windshield of a vehicle or the like, the protective glass surface of a lens device or an imaging device such as a network camera.

BACKGROUND ART

It is known that a wiper device is used for the purpose of wiping out rain, water droplets, dirt and the like deposited on various surfaces to be wiped by moving in close contact with the surfaces to be wiped that are used outdoors, and ensuring its field of view.

A wiper device is used for ensuring the field of view in various transportation and movement devices such as an automobile, a train, a ship, an aircraft, and the like, and wiping the surfaces of lens devices such as network cameras and protective glass installed outdoors.

Known wiper devices have a rubber-containing wiper blade provided at a portion to be in contact with a surface to be wiped. A wipers blade is desired to be closely attached to the surface to be wiped, sufficiently wipe off water droplets deposited on the surface to be wiped, and sufficiently scrape off dirt or the like stuck to the surface to be wiped.

CITATION LIST

PATENT LITERATURE

[PTL 1] Japanese Patent Application Publication No. 2004-017948
[PTL 2] Japanese Patent Application Publication No. 2019-094382

SUMMARY OF INVENTION

TECHNICAL PROBLEM

PTL 1 discloses a wiper blade rubber having a main body with at least the outer surface thereof covered with silicone rubber and a wiping layer made of high-hardness organic rubber provided adhering to an end of the main body on a side in contact with the glass surface. It is indicated that the tip being made of high-hardness rubber improves the wiping performance. However, according to the investigations of the present inventors, the wiper blade rubber according to PTL 1 still does not have sufficient wiping performance. In addition, the contact uniformity such as followability to the curved surface was not sufficient, either.

At least one aspect of the present disclosure is directed to providing a blade rubber that combines excellent followability to surfaces to be wiped in various shapes and excellent wiping performance at a high level. Also, at least one aspect of the present disclosure is directed to providing a wiper blade and a wiper device that are excellent in followability to various surfaces to be wiped and have high wiping performance.

Furthermore, at least one aspect of the present disclosure is directed to providing an urethane molded body having an excellent dilatancy characteristic.

SOLUTION TO PROBLEM

At least one aspect of the present disclosure provides a blade rubber comprising an elastic member comprising polyurethane, the blade rubber that brings a part of the elastic member into contact with a surface of a member to be cleaned, and cleans the surface of the member to be cleaned, wherein

in environment of a temperature of 8°C, when it is assumed that E'(1) represents a storage elastic modulus at a vibration frequency of $1 \times 10^{-3}$ Hz and E'(2) represents a storage elastic modulus at a vibration frequency of $1 \times 10^{4}$ Hz, of the blade rubber,
E'(1) is 12.0 to 18.0 MPa, and
E'(2) is 530 to 1500 MPa.

At least one aspect of the present disclosure provides a wiper blade, wherein

the wiper blade comprises a blade rubber and a support member that supports the blade rubber, and
the blade rubber is the above blade rubber.

At least one aspect of the present disclosure provides a wiper device, wherein

the wiper device comprises a wiper arm and a wiper blade mounted on the wiper arm, and
the wiper blade is the above wiper blade.

At least one aspect of the present disclosure provides an urethane molded body comprising polyurethane, wherein

in environment of a temperature of 8°C, when E'(1) represents a storage elastic modulus at a vibration frequency of 1 x $10^{-3}$ Hz and E'(2) represents a storage elastic modulus at a vibration frequency of 1 x $10^4$ Hz, of the urethan molded body,
E'(1) is 12.0 to 18.0 MPa, and
E'(2) is 530 to 1500 MPa.

ADVANTAGEOUS EFFECTS OF INVENTION

According to at least one aspect of the present disclosure, it is possible to obtain a blade rubber that combines excellent followability to surfaces to be wiped in various shapes and excellent wiping performance at a high level. Also, according to at least one aspect of the present disclosure, a wiper blade and a wiper device that are excellent in followability to various surfaces to be wiped and have high wiping performance can be obtained. Furthermore, according to at least one aspect of the present disclosure, an urethane molded body having excellent dilatancy properties can be obtained.

BRIEF DESCRIPTION OF DRAWINGS

[Fig. 1]

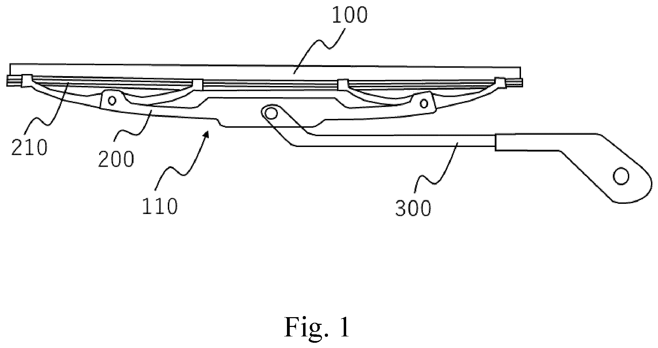

Fig. 1 is a schematic view of a wiper device.
[Fig. 2]

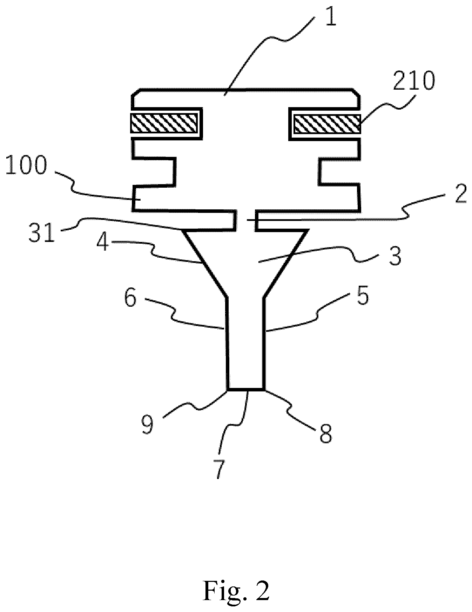

Fig. 2 is a schematic cross-sectional view of a cross section of a blade rubber.
[Fig. 3]

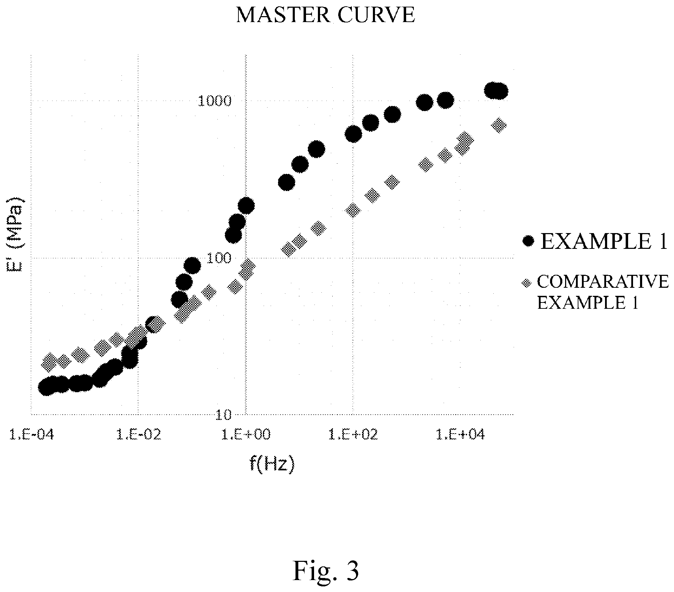

Fig. 3 is a diagram showing a master curve showing the relationship of the storage elastic modulus with respect to the vibration frequency of each elastic member according to Example 1 and Comparative Example 1.

DESCRIPTION OF EMBODIMENTS

In the present disclosure, the description of "from XX to YY" and "XX to YY" representing a numerical range means a numerical range including the lower limit and the upper limit which are endpoints, unless specified otherwise. When the numerical ranges are described in stages, the upper limits and lower limits of respective numerical ranges can be combined arbitrarily. Also, in the present disclosure, the description such as "at least one selected from the group consisting of XX, YY and ZZ" means any of XX, YY, ZZ, a combination of XX and YY, a combination of XX and ZZ, a combination of YY and ZZ, or a combination of XX, YY and ZZ.

<Configuration of a wiper blade>

The wiper blade according to an aspect of the present disclosure can be used in equipment such as transportation equipment including a vehicle as typified by an automobile, an aircraft, and a ship, and industrial machine equipment such as a construction machine. These transport equipment and industrial machine equipment are collectively called vehicles. The present disclosure relates to a blade rubber for a vehicle windshield and a wiper blade including the blade rubber. The window shield is not limited to the front window, but includes side windows and rear windows.
Further, the blade rubber and the wiper blade according to one aspect of the present disclosure can also be used as a blade rubber and a wiper blade for wiping a protective glass surface of a lens device or an imaging device such as a network camera. Embodiments of a wiper blade according to an aspect of the present disclosure will be described in detail below, but are not limited thereto.

<Wiper device>

For example, the wiper device includes a wiper arm 300 and a wiper blade 110 mounted on the wiper arm 300, as shown in Fig. 1. The wiper arm 300 is associated with, for example, a drive motor (not shown). The wiper blade 110 has a blade rubber 100 and a support member for supporting the blade rubber 100. Examples of the support member include a tournament 200. Generally, the tournament 200 is provided with the blade rubber 100 and a vertebra 210 for supporting the blade rubber 100.

As shown in Fig. 2, the blade rubber 100 includes a base 1, which is a mounting portion of the blade rubber 100 to the tournament 200, and a lip portion 3 which is pivotally connected to the base 1 via a neck portion 2. The wiper blade is formed in a substantially uniform cross-sectional shape in the longitudinal direction.

In a cross section in a direction orthogonal to a longitudinal direction of the blade rubber, the lip portion 3 includes a shoulder portion 31 extending to a lateral side beyond the neck portion at an end part on the neck portion side of the lip portion 3. Further, the blade rubber may have a tapered portion 4 whose width gradually decreases from the side closer to the base 1 toward the direction away from the base 1 in order to stabilize the contact posture of the blade rubber. Further, the degree of gradual reduction of the width of the tapered portion 4 may be changed stepwise. For example, the lip portion 3 may have a lip tip portion in which the degree of gradual reduction of the width of the tapered portion decreases on the side closer to the tip away from the base 1 of the lip portion. The lip tip portion may have portions with the same or substantially the same width from the side closer to the base 1 toward the tip.

The lip tip portion can form a tip of the blade rubber. The blade rubber preferably has a plate shape having a main surface facing the member to be cleaned and a tip surface 7 forming a tip side edge with the main surface at least on the tip side of the blade rubber. The blade rubber has, for example, a first main surface 5 and a second main surface 6 opposite to the first main surface 5. A first tip side edge 8 is formed by the first main surface 5 and the tip surface 7. Further, a second tip side edge 9 is formed by the second main surface 6 and the tip surface 7.

Also, the wiper device is not particularly limited, and a known configuration may be adopted. Examples thereof may include various types of wiper devices, such as tandem type and counter-wiping type.

The configuration of the wiper blade is not particularly limited, and known ones may be adopted. In addition to the above-described tournament type, support members of various types, such as flat type, may be adopted.

The present inventors conducted a study regarding recent automobile window shields. As a result, recently, it has been found that the longitudinal or lateral curvature of the windshield tends to increase due to the requirements for improving fuel economy and designability. Accordingly, it has been found that the conventional blade rubber may not necessarily have sufficient contact uniformity due to particularly the occurrence of floating at the blade end portion.

In addition, for not only automobiles but also network cameras, the shapes of the lens covers have been increasingly spherical in order to look out over a wider region. Although still better followability to a curved surface is required of a wiper to be attached to such a spherical lens cover, a conventional wiper may not provide sufficient contact uniformity.

Furthermore, the wiping performance of the blade rubber has been investigated, and it has also been found that the wiping performance is not always satisfactory for wiping off particulate dirt such as mud, sand, and pollens, although it is satisfactory for wiping off ordinary rain water.

In particular, small particles of sea water, or the like are suspended in the atmosphere at the coastal area and its periphery, and salt which is one of the components of sea water may be dried and formed as stuck dirt in a wind shield of a vehicle or the like, or a network camera installed at the coastal area. A conventional general blade rubber may ride over stuck dirt and may not be able to sufficiently scrape off the stuck dirt. This tendency was particularly prominent in flexible wiper blades with improved followability to the surface to be wiped.

In order to improve the uniform contact property in the longitudinal direction, a soft material may be used as a material to be used for the blade rubber, but when a soft material is used, a decrease in the wiping performance cannot be avoided. On the other hand, although improvement in wiping performance can be obtained by using a rigid material having a high elastic modulus, uniform contact property in the longitudinal direction is reduced, and floating or the like occurs, and a stable contact state cannot be obtained.

As described above, in the wiper blade, it has been difficult to achieve both of the excellent followability to the surface to be wiped (uniform contact property in the longitudinal direction) and the excellent property to scrape off the stuck dirt.

<Analysis of cleaning phenomenon/vibration and cleaning>

The present inventors minutely analyzed the behavior of a contact region (tip of the blade rubber) of the blade rubber with a member to be cleaned when the blade rubber is in contact with the stationary member to be cleaned, and the behavior of the tip of the blade rubber when the blade rubber is in contact with the member to be cleaned while moving. As a result, it was found that the followability of the blade rubber to the member to be cleaned and the wiping performance were involved in the storage elastic modulus of the elastic member at the following first and second vibration frequencies.

<First vibration frequency>

The vibration frequency involved in the contact state of the blade rubber with respect to the member to be cleaned is $1\times10^{-3}$ Hz.

Since the blade rubber remains in contact with the member to be cleaned even during non-operation, a nip between the member to be cleaned and the blade rubber is formed in a state where stress is sufficiently relaxed. When the transparent flat glass is brought into contact with the tip of the blade rubber, and the blade rubber is operated, and stopped. The tip of the blade rubber immediately thereafter is micro observed. As a result, how the rubber of the blade rubber gradually form a nip with the glass is observed. It can be observed that the spread of the nip formation is settled at about $10^{-3}$ Hz. Accordingly, the present inventors have found that this vibration frequency is involved in the nip formation, i.e., the contact stability of the blade rubber with the glass, and the followability to glass in the longitudinal direction.

<Second vibration frequency>

The vibration frequency involved in the slipping-through of the dirt at the tip of the blade rubber in contact with the member to be cleaned is $1\times10^4$ Hz.

The situation where the wiper blade was operated and the dirt on the glass was scraped off was observed in detail. In particular, when the dirt contains particulate impurities such as mud and sand, the impact when the tip portion of the blade rubber hits the particulate dirt was considered, and as a result, the displacement of the period of $1\times10^4$ Hz was observed. It has been found that by setting the elastic modulus of the blade rubber at this vibration frequency within a specific range, the blade rubber dams the dirt and completely scrapes off the dirt without leaving the stain on the glass without running on or slipping through the dirt when the blade rubber collides with the dirt.

<Dynamic viscoelasticity and cleaning>

As described above, the inventors have focused on, and advanced a study on the frequency dependence of the dynamic viscoelasticity of the blade rubber material from the knowledge that the vibration of the blade rubber is closely involved in the contact state with the member to be cleaned and the cleaning phenomenon.

The present inventors have found that, for example, the blade rubber in the following aspects can exhibit excellent cleaning performance to wipe off the surface of a windshield of a vehicle or the like, and the surface of protective glass of a lens device or an imaging device such as a network camera.

Specifically, in environment of a temperature of 8°C, the blade rubber has the following characteristics:
It is assumed that the storage elastic modulus of the blade rubber when the vibration frequency is $1\times10^{-3}$ Hz is E'(1) and the storage elastic modulus of the blade rubber when the vibration frequency is $1\times10^4$ Hz is E'(2). At this time, E'(1) is 12.0 to 18.0 MPa and E'(2) is 530 to 1500 MPa.

By setting E'(1) at 12.0 to 18.0 MPa, stable contact can be maintained regardless of the curvature of the glass surface. The present inventors considers as follows. E'(1) being 18.0 MPa or less indicates that the blade rubber is sufficiently soft when it comes in contact with the member to be cleaned, and forms a nip. For this reason, when E'(1) exceeds 18.0 MPa, stable contact cannot be made, partial floating becomes more likely to occur, and uneven wiping and leakage tend to occur.

Also, when E'(1) is less than 12.0 MPa, the blade rubber is too soft during the nip formation, so that the contact resistance of the blade is high and becomes unstable, so that the scraping property of the stuck dirt may be lowered. In addition, the blade rubber becomes too soft to bring about a contact state like an abdominal contact, and the contact pressure is lowered, so that stable wiping force is hard to obtain.

E'(1) is preferably 12.8 to 18.0 MPa.

By setting E'(2) at 530 to 1,500 MPa, stable contact is achieved when the wiper blade collides with the dirt, thus, it is possible to reliably scrape off the dirt and suppress slipping-through. When E'(2) exceeds 1500 MPa, the contact resistance increases and the scraping property of the stuck dirt decreases.

On the other hand, the present inventors consider as follows. E'(2) being 530 MPa or higher indicates that the blade rubber has a frequency and an elastic modulus as high as those upon collision against the stuck dirt. For this reason, the blade rubber can receive and sufficiently scrape off the stuck dirt. When E'(2) is less than 530 MPa, the blade rubber may ride on the dirt when coming in contact with the dirt, and the dirt may slip therethrough.

E'(2) is preferably 700 to 1500 MPa, and more preferably 750 to 1460 MPa. An E'(2) falling within the above range results in better scraping property.

By satisfying the foregoing, it is possible to obtain the blade rubber, the wiper blade, and the wiper device which can suppress cleaning faulty due to the slipping-through of dirt while maintaining a stable contact state even with respect to a member to be cleaned having a large curvature, and as a result, can perform long-life cleaning.

Materials exhibiting the above characteristics are not particularly limited, but specifically, the elastic member contains polyurethane. Also, the polyurethane tends to achieve a storage elastic modulus at the above frequency within the above specific range. The polyurethane is preferably a polyurethane elastomer.

Here, the characteristics are referred to as "dilatancy characteristics" in the present disclosure, such that the storage elastic modulus E'(1) at a low vibration frequency ($1\times10^{-3}$ Hz) is small and the storage elastic modulus E'(2) at a high vibration frequency ($1\times10^4$ Hz) is larger as compared with E'(1). "Dilatancy" is originally the name given for the phenomenon of an increase in volume with respect to shear in a semi-solid dispersion including a powder and a liquid, but recently, the phenomenon in which viscosity increases with an increase in shear rate has also come to be referred to as dilatancy, and as objects showing such a phenomenon, mention may also be made of polyurethane (see PTL 2).

Incidentally, the polyurethane according to PTL 2 is as very soft as a storage elastic modulus of about 0.1 to 1 MPa at a vibration frequency of $1\times10^{-3}$ Hz. In the case where such a polyurethane molded body is applied to, for example, a wiper blade, when the wiper blade is brought into contact with an object to be wiped as described above, the tip side is largely deformed so that not the edges 8 and 9 of the tip of the wiper blade shown in Fig. 2 but the main surfaces 5 and 6 come in surface contact with the surface to be wiped. As a result, it is considered that the contact pressure on the surface to be wiped is dispersed and the wiping performance is reduced.

On the other hand, for the polyurethane molded body according to at least one aspect of the present disclosure, in environment of a temperature of 8°C, E'(1) is 12.0 to 18.0 MPa and E'(2) is 530 to 1500 MPa where E'(1) represents the storage elastic modulus when the vibration frequency of the urethane molded body is $1\times10^{-3}$ Hz, and E'(2) represents the storage elastic modulus when the vibration frequency is $1\times10^4$ Hz. Thus, different from the polyurethane according to PTL 2, the polyurethane molded body has excellent dilatancy characteristics while maintaining the storage elastic modulus at a vibration frequency of $1\times10^{-3}$ Hz at a constant value or higher.

The polyurethane elastomer includes, for example, a hard segment and a soft segment. The hard segments refer to crosslinking points and components with low molecular mobility in the vicinity of the crosslinking points, such as aggregated crystalline components of urethane bonds, nurate bonds, polymeric MDI, and trimethylolpropane. Also, the soft segment refers to, for example, a segment between a cross linking point and a cross linking point.

The elastic modulus in the low-frequency region, such as E'(1) reflects the mobility of the overall molecules and is affected by both the molecular mobility of the hard segment and the molecular mobility of the soft segment. In the low-frequency region, the time until relaxation is sufficient, and hence the soft segment, which is a component with large molecular mobility, can move freely and has small contribution to the elastic modulus. However, the hard segment, which is a component with small molecular mobility, cannot move freely, and the magnitude of molecular mobility contributes to the elastic modulus. In other words, the larger the molecular mobility of the hard segment, the smaller the E'(1), and the smaller the molecular mobility of the hard segment, the larger the E'(1). Accordingly, for the polyurethane in the blade rubber according to one aspect of the present disclosure, it is important to increase the molecular mobility of the hard segment.

For example, increasing the molecular mobility of the hard segment makes it easier to control the E'(1) to a low level within the specific range.

On the other hand, in a high-frequency region such as E'(2), the soft segment cannot move freely because the time until relaxation is short, and the magnitude of its molecular mobility contributes to the elastic modulus. On the other hand, the hard segments are not sufficiently movable. For this reason, when the soft segments have come to be unable to freely move, the entire polymer is frozen and the elastic modulus is suddenly increased. Accordingly, the effect of soft segment molecular mobility on the storage modulus in the high-frequency region is more remarkable than the effect of hard segment molecular mobility thereon. In other words, the larger the molecular mobility of the soft segment, the smaller the E'(2), and the smaller the molecular mobility of the soft segment, the larger the E'(2). Accordingly, for the polyurethane in the blade rubber according to one aspect of the present disclosure, it is important to reduce the molecular mobility of the soft segments.

As described above, E'(1) can be controlled mainly by adjusting the molecular mobility of the hard segment, and E'(2) can be controlled mainly by adjusting the molecular mobility of the soft segment.

Molecular mobility of hard segments decreases with an increase in rigid components, such as the nurate bonds in the polyurethane, crosslinked moieties derived from polymeric MDI, and crystalline components of soft segments, and increases by softening the crosslinking point.

Accordingly, in order to reduce E'(1), it is preferable to minimize the use of polymeric MDI as a raw material for the polyurethane, and in particular, it is preferable not to use polymeric MDI at all. Further, in order to prevent the formation of crystal components due to the interaction of the soft segment portions, trimethylolpropane is preferably used as the crosslinking component. By introducing crosslinked structures derived from trimethylolpropane into the polyurethane, the soft segment portions present between the crosslinked structures become less likely to interact with each other due to steric hindrance of the crosslinked structures derived from trimethylolpropane. As a result, the formation of crystalline structures (crystal components), i.e. hard segments, resulting from the mutual interaction of the soft segments is inhibited.

Incidentally, since trimethylolpropane has a methylene skeleton adjacent to a hydroxyl group, a crosslinked structure flexible in terms of the molecular structure is formed. As a result, the polyurethane according to an aspect of the present disclosure has a higher molecular mobility of the hard segment and can reduce E'(1) as compared with a polyurethane having a rigid crosslinked structure derived from a polymeric MDI.

The molecular mobility of the soft segments can be controlled by the crosslinking density. The higher the crosslinking density, the smaller the molecular weight between the crosslinking points and the smaller the space where the soft segments can move freely. For this reason, the molecular mobility is reduced. Further, it is also effective to make the lengths of the soft segments between the crosslinking points uniform in order to suppress the molecular mobility of the soft segments.

Also, the uniformization of the lengths of the soft segments can make the rise of the storage elastic modulus from the low frequency region to the high frequency region in the master curve steeper. For this reason, it is possible to more easily obtain an elastic member with an E'(1) within the range of 12.0 to 18.0 MPa and an E'(2) within the range of 530 to 1500 MPa. For such polyurethanes that the distance between crosslinking points is short and the lengths between crosslinking points are uniform, it is preferable, for example, to set the number average molecular weight of the prepolymer as a raw material for the polyurethane within the range of 8000 to 12000, and to minimize the use of chain extenders such as 1,4-butanediol, and particularly, it is preferable not to use a chain-extender such as 1,4-butanediol at all.

Incidentally, one example of the conditions for measuring the number average molecular weight of the prepolymer is as follows. The molecular weight is converted based on the elution time of the standard substance (polystyrene).

    Device: HLC-8320GPC (trade name: manufactured by Tosoh Corporation)
    Column: TSKgel SuperMultipore HZ-N (trade name: manufactured by Tosoh
    Corporation; 4.6 mm ID×15 cm)
    Eluent: THF
    Flow rate: 0.35 mL/min.
    Sample: 0.5 wt% THF solution
    Injection volume: 10 $\mu$L
    Detector: RI
    Temperature: 40°C
    Standard substance: Polystyrene

Therefore, by increasing the molecular mobility of the hard segment and reducing the molecular mobility of the soft segment, it is possible to obtain a polyurethane elastomer with a small E'(1) and a large E'(2). Such a polyurethane elastomer is an elastic member that is different from the conventional one, and can achieve both excellent curved surface contact stability and excellent scraping performance at a high level.

The wiper blade according to PTL 1 is intended to use two or more materials to improve the wiping performance. Further, it is also believed that the wiper blade according to PTL 1 has a high E'(1) because of the use of a high-hardness rubber at the tip. On the other hand, in the wiper blade according to one aspect of the present disclosure, the above-described polyurethane achieves contradictory performances, that is, the superior contact stability to a curved surface and the superior scraping performance. For example, the blade rubber preferably includes a molded body of a polyurethane elastomer.

<Method for measuring storage elastic modulus>

E'(1) and E'(2) are obtained by performing the measurement under the conditions where the frequency and the temperature were arbitrarily varied using a dynamic viscoelasticity measuring device, and forming a master curve at a reference temperature of 8°C from the measured data. The master curve is created based on a temperature-time conversion law. The horizontal axis represents the frequency and the vertical axis represents the elastic modulus. The master curve can be formed by shifting data of the frequency variance measured at each temperature so as to overlap the data of the reference temperature.

The storage elastic moduli E'(1) and E'(2) at a given vibration frequency can be calculated by, for example, curve fitting and mathematical expression based on a generalized Maxwell model.

The measurement temperature of the storage elastic modulus was set at 8°C because of the following. As the use environment for an automobile and a network camera, under environment at a temperature as low as 8°C, generally, the flexibility of rubber tends to be lost and the contact stability tends to be lost, and the rubber tends to become hard, and tends to become difficult to clean.

The molecular mobilities of the soft segment and the hard segment can be evaluated by the spin-spin relaxation times in pulse NMR.

In the pulse NMR measurement in 50°C environment, the spin-spin relaxation time (T2$_L$) of the soft segment upon separation into two components of the hard segment and the soft segment is preferably 250 to 320 $\mu$s.

When the soft segment has high molecular mobility, the spin-spin relaxation time (T2$_L$) of the soft segment increases because relaxation takes time.

The spin-spin relaxation time T2 of the rubber is measured by a solid echo method using a pulse NMR device. The pulse NMR device is a device for evaluating the mobility of polymer molecules such as rubber from the mobility (relaxation time) of hydrogen atoms in the molecular chain, and in this present embodiment, a solid echo method is used as the sequence. The solid echo method itself using a pulse NMR device can use known methods and is not particularly limited.

By measuring the spin-spin relaxation time T2 (lateral relaxation time) of the blade rubber by pulse NMR measurement, a T2 relaxation curve (free induction decay curve) is obtained.

Specific measurement procedures will be described later.

When T2$_L$ is less than 250 $\mu$s, E'(1) tends to increase, and when T2$_L$ is more than 320 $\mu$s, E'(2) tends to decrease. From the viewpoint of meeting the above-described ranges of E'(1) and E'(2), 250 to 320 $\mu$s is preferable.

270 to 300 $\mu$s is more preferable.

Further, in the pulse NMR measurement in 50°C environment, the T2 relaxation time (T2$_S$) of the hard segment upon separation into two components of the hard segment and the soft segment is preferably 52 to 85 $\mu$s.

When T2$_S$ is 52 $\mu$s or more, E'(1) tends to decrease.

<Achieving means>

Specific soft and hard segments mobility control means for reducing E'(1) and increasing E'(2) will be described.

<Molecular mobility of hard segments>

The molecular mobility of the hard segments is affected by rigid components. The rigid components are nurate and crystals, and can increase the mobility by being reduced. Therefore, it is desirable to minimize the nurate bonds and achieve urethane rich. Specifically, the following are provided:

In the FT-IR measurement of a blade rubber using diamond as an ATR crystal, the value of the ratio of the peak intensity at 1415 cm$^{-1}$ to the peak intensity at 1538 cm$^{-1}$ (peak intensity at 1415 cm$^{-1}$/peak intensity at 1538 cm$^{-1}$) is preferably 0.50 to 0.65.

The peak at 1415 cm$^{-1}$ is the peak corresponding to the ring of isocyanurate. Also, the peak at 1538 cm$^{-1}$ is the peak corresponding to the NH deformation of the urethane bond. The case where the peak intensity at 1415 cm$^{-1}$/the peak intensity at 1538 cm$^{-1}$ (peak intensity ratio) is greater than 0.65 indicates that there are many nurate bonds. For this reason, the rigidness of the nurate reduces the molecular mobility of the hard segment, and the E'(1) tends to increase. On the other hand, when the peak intensity ratio is less than 0.50, conversely, E'(1) tends to be too small, and hence 0.50 to 0.65 is preferable. The peak intensity ratio is more preferably 0.53 to 0.65.

In order to set the peak intensity ratio within the above range, for example, mention may be made of the method in which the nurate bonds are reduced, and urethane rich is achieved by avoiding a catalyst that promotes nurating, using an urethanization catalyst, making the formulation ratio of -NCO and -OH close to 1, setting the reaction temperature at 100°C or less, and the like.

Polyurethane may have a rigid structure, such as polymeric MDI, as a constituent component so long as it is within the range that satisfies E'(1) and E'(2). Specifically, the following is shown.

The blade rubber has a plate shape having main surfaces facing the member to be cleaned and a tip surface 7 forming tip side edges (8 and 9) with the main surfaces (5 and 6) at least on the tip side of the blade rubber. Then, it is assumed that a line segment having a distance of 0.5 mm from the tip side edge is drawn in parallel with the tip side edge on the tip surface. Then, assuming that the length of the line segment is L', and the points of 1/8L', 1/2L', and 7/8L' from one end side on the line segment are referred to as P0', P1', and P2', respectively.

Using a direct sample introduction type mass spectrometer that heats and vaporizes samples sampled at each of the above-mentioned P0', P1', and P2' in an ionization chamber and ionizes sample molecules, heating is performed up to 1000°C at a ramp rate of 10 °C/s. The detection amount of all ions obtained as a result of this is referred to as M1, and the integrated intensity of the peak of the extracted ion thermogram corresponding to the m/z value derived from the polymeric MDI in the range of 380.5 to 381.5 is referred to as M2. At this time, it is preferred that M2/M1 is less than 0.0010.

As the isocyanate, a 4,4'-MDI which is highly reactive, and in which the two isocyanate groups have equivalent reactivity is preferably used, while polymeric MDI, which is a tri-functional MDI, is preferably minimized. Specifically, it is preferred that M2/M1 is less than 0.0010. M2/M1 falling within this range tends to meet the good E'(1) range.

M2/M1 is more preferably 0.0008 or less. Smaller M2/M1 is more preferable, and the lower limit is not particularly limited, but is preferably greater than or equal to 0.0000.

When M2/M1 is 0.0010 or more, E'(1) tends to increase due to the rigidity of the polymeric MDI.

Further, in order to increase the molecular mobility of the hard segment, it is preferable to minimize the crystalline structure. Specifically, it is preferable to minimize materials that tends to form crystalline structures, such as 1,4-butanediol, and to make them rich in crosslinking agents, such as trimethylolpropane. A crosslinking agent such as trimethylolpropane makes it easier to take a distance between the urethane bonds and makes it difficult to form a crystalline structure.

<Molecular mobility of soft segments>

The molecular mobility of soft segments tends to be affected by the inter-crosslinking point distance and the structure between crosslinking points. For this reason, for example, by shortening the distance between crosslinking points and increasing the ester group concentration of the polyol, the mobility can be reduced. The methods for reducing the inter-crosslinking point distance include increasing the crosslinking agent concentration with a crosslinking agent, such as trimethylolpropane.

A method of reducing the distance between crosslinking points includes, for example, increasing the concentration of the crosslinking agent in the raw material composition of the elastic member. The distance between the crosslinking points depends on the ester group concentration, but is preferably about 6000 to 9000 g/mol. The concentration of the crosslinking agent in the raw material composition of the elastic member is preferably 0.30 to 0.70 mmol/g, more preferably 0.40 to 0.61 mmol/g, and further preferably 0.50 to 0.60 mmol/g, also from the viewpoint of the molecular mobility of the hard segment.

A method for calculating the concentration of the crosslinking agent will be described below. For example, it can be quantified by pyrolysis GC/MS.

The polyhydric alcohol is detected by pyrolysis GC/MS. The measurement conditions will be shown below.

Device:

**[0090]**

　　Pyrolysis device: Trade name: EGA/PY-3030D, manufactured by Flortier lab Co.
　　Gas Chromatography Device: TRACE1310 gas chromatograph, manufactured by ThermoFisher Scientific Co.
　　Mass spectrometer: ISQLT, manufactured by ThermoFisher Scientific Co.
　　Pyrolysis temperature: 500°C
　　GC column: Inner diameter 0.25 mm×30 m stainless capillary column
　　Stationary phase 5% phenylpolydimethyl siloxane
　　Temperature rising conditions: Temperature is held at 50°C for 3 minutes and is increased to 300°C at 8 °C/min.
　　MS conditions: Mass number range m/z 10 to 650
　　Scan Rate: 1 second/scan

The type of the polyhydric alcohol is qualified by GC/MS. A calibration curve in GC analysis of known concentrations of the qualified polyhydric alcohol species is created, and quantitation is performed from the GC peak area ratio.

Furthermore, the distances between the crosslinking points of the soft segments are preferably as uniform as possible. When the distances between the crosslinking points are uneven, some components with large mobility may reduce E'(2), and some components with small mobility may increase E'(1). Accordingly, in order to set E'(1) and E'(2) within the above specific ranges, it is preferable to make the inter-crosslinking distances uniform while reducing the rigid components and increasing the number of crosslinked structures. Although any methods for making the distance between crosslinking points uniform are acceptable, mention may be made of a method for manufacturing polyurethane by a prepolymer method using a prepolymer having molecular weight distribution as uniform as possible. It is also preferable to provide a simple material configuration with uniform molecular weight so that the molecular weight distribution may become uniform, and it is preferable to reduce the use of chain extenders such as glycols whose molecular weight distribution tends to be made uneven.

At this step, the number average molecular weight of the prepolymer is desirably 8000 to 12000. The molecular weight can be analyzed by GPC and the method is as described above.

[An urethane molded body such as a blade rubber]

The polyurethane (preferably a polyurethane elastomer) constituting an urethane molded body such as a blade rubber is mainly obtained from the raw materials such as polyol, a chain extender, a crosslinking agent, polyisocyanate, a catalyst, and other additives. These raw materials will be described in details below.

Examples of the polyols may include: polyester polyols such as polyethylene adipate polyol, polybutylene adipate polyol, polyhexylene adipate polyol, (polyethylene/polypropylene) adipate polyol, (polyethylene/polybutylene) adipate polyol, and (polyethylene/polineopentylene) adipate polyol; polycaprolactone-based polyol obtained by ring-opening polymerization of caprolactone; polyether polyols such as polyethylene glycol, polypropylene glycol, and polytetramethylene glycol; and polycarbonate diol.

These can be used singly alone or in combination of two or more thereof. Among the above polyols, polyester polyol using adipate (more preferably, butylene adipate) is preferred because a polyurethane elastomer having excellent mechanical characteristics can be obtained.

As the chain extender, glycols and polyhydric alcohols capable of extending a polyurethane elastomer chain can also be used.

Examples of glycol may include the following: ethylene glycol (EG), diethylene glycol (DEG), propylene glycol (PG), dipropylene glycol (DPG), 1,4-butanediol (1,4-BD), 1,6-hexanediol (1,6-HD), 1,4-cyclohexanediol, 1,4-cyclohexanedimethanol, xylylene glycol (terephthalyl alcohol), and triethylene glycol.

As trihydric or higher polyhydric alcohols, mention may be made of trimethylolpropane, glycerin, pentaerythritol, and sorbitol. These can be used singly alone or in combination of two or more thereof. These trihyrdic or higher polyhydric alcohols are preferably used as crosslinking agents. Trimethylolpropane is more preferred.

Examples of the above-mentioned polyisocyanate may include the following: 4,4'-diphenylmethane diisocyanate (4,4'-MDI), polymeric MDI, 2,4-tolylene diisocyanate (2,4-TDI), 2,6-tolylene diisocyanate (2,6-TDI), xylene diisocyanate (XDI), 1,5-naphthylene diisocyanate (1,5-NDI), p-phenylene diisocyanate (PPDI), hexamethylene diisocyanate (HDI), isophorone diisocyanate (IPDI), 4,4'-dicyclohexylmethane diisocyanate (hydrogenated MDI), tetramethylxylene diisocyanate (TMXDI),and carbodiimide-modified MDI. Among these, 4,4'-MDI, which is highly reactive and in which the two isocyanate groups have equivalent reactivity, is preferred.

As the catalysts, commonly used catalysts for curing a polyurethane elastomer can be used, and examples thereof may include tertiary amine catalysts, and specifically include the following. Aminoalcohols such as dimethyl ethanolamine, N,N,N'-trimethylaminopropylethanolamine, and N,N'-dimethylhexanolamine; trialkylamine such as triethylamine; and tetraalkyldiamines such as N,N,N'N'-tetramethyl-1,3-butanediamine; triethylenediamine, piperazine-based compounds, and triazine-based compounds.

Further, organic acid salts of metals, such as potassium acetate, and potassium alkali octyrate can also be used. Additionally, metal catalysts, generally to be used for the urethanization, for example, dibutyltin dilaurate, can also be used. These can be used singly alone or in combination of two or more thereof.

As the catalyst, N,N'-dimethylhexanolamine is preferred. As commercially available ones, mention may be made of the carouser No. 25 (trade name) manufactured by Kao Corporation. The catalyst is a catalyst suitable for making the urethanization more dominant than the nuration. Also, because of the presence of OH groups at the terminal, they also react by themselves, to be incorporated into the interior while acting as a catalyst. For this reason, the possibility of chemical attack due to seeping can be reduced. Furthermore, the reactivity is also good. An ethylene glycol solution of potassium acetate is also preferred. As commercially available ones, mention may be made of POLYCAT 46 (trade name) (manufactured by Air Products Japan Co.).

For example, the polyurethane elastomer preferably includes, as the constituent components, at least one polyol selected from the group consisting of polyester polyols and polyether polyols, a trihydric or higher polyhydric alcohol, and 4, 4'-MDI.

The content of the polyol in the constituent components of the polyurethane elastomer is preferably 50 to 80 mass%, and more preferably 55 to 70 mass%.

In the constituent components of the polyurethane elastomer, the content ratio of the polyisocyanate is preferably 15 to 50 mass%, and more preferably 25 to 40 mass%.

The content ratio of the trihydric or higher polyhydric alcohol in the constituent components of the polyurethane elastomer is preferably 3 to 15 mass%, and more preferably 5 to 10 mass%.

To the raw materials constituting the blade rubber, if necessary, additives such as a pigment, a plasticizer, a waterproof agent, an antioxidant, an ultraviolet light absorbing agent, and a light stabilizer can be added.

<Method for manufacturing an urethane molded body such as blade rubber>

The method for manufacturing an urethane molded body such as a blade rubber is not particularly limited, and can be selected from among known methods. For example, an urethan molded body can be obtained by injecting, for example, a polyurethane elastomer raw material composition into a mold of a desired urethane molded body such as a blade rubber mold, and heating and curing it.

The method for manufacturing an urethane molded body such as a blade rubber containing a polyurethane elastomer is not particularly limited, but the method preferably includes the following steps. The method for manufacturing an urethane molded body such as a blade rubber preferably, first, includes a step of allowing polyol and polyisocyanate to react with each other to obtain a prepolymer. The NCO content of the prepolymer has no particular restriction, and is preferably 3.00 to 15.00 mass%, and more preferably 6.00 to 10.00 mass%.

Subsequently, a mixture of the crosslinking agent and the catalyst (curing agent) and the resulting prepolymer are mixed to obtain a polyurethane elastomer composition. Polyols may be added to the curing agent. From the viewpoint of making the distances between the crosslinking points uniform, it is preferable that the number average molecular weight of the polyol to be added to the curing agent is made equal to the number average molecular weight of the polyol used in the prepolymer. For example, it is preferable that the difference in the number average molecular weight therebetween is 500 or less, 200 or less, or 100 or less.

Then, a polyurethane elastomer composition is introduced into a mold and is cured to obtain an urethane molded body such as a blade rubber. At this time, by previously forming shapes to be formed into a neck portion, a tapered portion, and a lip portion in the mold, the blade rubber having these portions can be obtained. A known release agent may be applied to the mold.

The tip of the lip portion of the molded body may be cut to increase the smoothness of the edge.

Alternatively, the blade rubber may be manufactured by manufacturing a pair of tandem-type molded bodies formed in such a shape that the lip portions face each other, and cutting the lip portions in the longitudinal direction at the middle.

Further, in addition to the blade rubber, the urethane molded body can be preferably used for, for example, a belt conveyor, a roller, a tire, and the like.

[Examples]

Below, the present invention will be described by way of Manufacturing Examples, Examples, and Comparative Examples. However, the present invention is not limited by these Examples at all. Reagents or industrial chemicals were used as raw materials other than those indicated in the Examples and Comparative Examples.

In the Examples and Comparative Examples, a wiper blade was manufactured and evaluated. The formulation and the evaluation results of each Example are shown in Table 1.

<Example 1>

[Preparation of raw materials for manufacturing a wiper blade]

(Prepolymers)

·325.0 g of 4,4'-diphenylmethane diisocyanate (trade name: Millionate MT, manufactured by Tosoh Corporation (hereinafter referred to as 4,4'-MDI) as isocyanate

·675.0 g of polybutylene adipate polyester polyol having a number average molecular weight of 2500 (trade name: NIPPOLLAN 3027, manufactured by Tosoh Corporation) (hereinafter referred to as PBA2500) as polyol

The above materials was allowed to react at 80°C for 3 hours to obtain a prepolymer having an NCO content of 8.80 mass%.

(Curing agent)

·89.0 g of trimethylolpropane (manufactured by Tokyo Chemical Industries Co., Ltd.) (hereinafter referred to as TMP)

·0.28 g of N, N'-dimethylhexanolamine (trade name: Kaorizer No. 25, manufactured by Kao Corp.) (hereinafter referred to as No. 25)

Subsequently, the above materials were mixed to manufacture a curing agent.

A polyurethane elastomer composition was obtained by mixing the resulting prepolymer with a curing agent.

Then, the polyurethane elastomer composition was injected into the mold for the wiper blade, and was cured for 5 minutes at 130°C, followed by demolding, resulting in a polyurethane molded body.

For the mold, the one which was coated with a release agent A before injecting the polyurethane elastomer composition was used. For the release agent A, a mixture of 5.06 g of ELEMENT14 PDMS 1000-JC (trade name, manufactured by Momentive Performance Materials Co.), 6.19 g of ELEMENT 14 PDMS 10K-JC (trade name, manufactured by Momentive Performance Materials Co.), 3.75 g of SR1000 (trade name, manufactured by Momentive Performance Materials Co.), and 85 g of EXXSOL DSP145/160 was used.

The tip of the lip portion of this molded body was appropriately cut, resulting in the blade rubber according to the present Example. The length in the longitudinal direction of the blade rubber was set at 650 mm. Further, the thickness of the neck portion was set at 0.22 mm and the thickness of the lip portion was set at 0.7 mm. The resulting blade rubber was evaluated in the following manner.

[Method for measuring dynamic viscoelasticity]

The storage elastic moduli E'(1) and E'(2) were measured with temperature frequency dispersion using a dynamic viscoelasticity measuring device, and a master curve was created and calculated based on the temperature-time conversion law.

The conditions will be described below.

Device: dynamic viscoelasticity measuring device (trade name: DMA EXPLEXOR 500N, manufactured by NETZSCH Co.)
Measurement Mode: Tension
Static strain: 2%
Dynamic strain: 0.5%
Measurement temperature: -30°C to 80°C (56 points in increments of 2°C)
Measurement frequency: 0.1 to 100 Hz (5 points)

A master curve is created at a reference temperature of 8°C by using in-device software.

From the resulting master curve, mathematical approximation was performed based on the generalized Maxwell model.

The generalized Maxwell model is as follows.

[Math. 1]

$$E_r(\tau) = E_e + \sum_{i=1}^{N} E_i \exp\left(-\frac{\tau}{\tau_i}\right)$$

From the above equation, separation into the storage elastic modulus E' and the loss elastic modulus E" results in the following:

[Math. 2]

$$\mathrm{E}'(\omega) = E_e + \sum_{i=1}^{N} \frac{E_i \tau_i^2 \omega^2}{1 + \tau_i^2 \omega^2}$$

$$\mathrm{E}''(\omega) = \sum_{i=1}^{N} \frac{E_i \tau_i}{1 + \tau_i^2 \omega^2}$$

The number of terms of the generalized Maxwell model was set at elasticity term ($E_e$) 1+viscoelasticity term ($E_i$) 20 (i=1 to 20). $\tau_i$ was defined at any 20 points between $10^{-8}$ to $10^5$.

$E_e$ and $E_i$ were optimized by GRG non-linear (generalization concise gradient method) so as to minimize the difference between E' and E" of the Maxwell model and E' and E" of the master curve. Specifically, the solver function of the Excel was used.

From the resulting master curve approximation, E'(1) (E' at $1 \times 10^{-3}$ Hz), and E'(2) (E' at $1 \times 10^4$ Hz) were obtained.

Incidentally, the sample for measurement was manufactured in the following manner.

Samples were manufactured so as to include the corner (e.g., the tip side edge) of the contact region of the blade rubber with the member to be cleaned. Manufacturing was achieved by cut out into strips of 50 mm in length, 1 mm in width, and 0.7 mm in thickness (50 mm in length is a portion of the blade rubber in the longitudinal direction).

Incidentally, when the object to be measured is an urethane molded body other than the blade rubber, a test piece having a length of 50 mm, a width of 1 mm, and a thickness of 0.7 mm may be used.

[Measurement of T2 relaxation time]

The spin-spin relaxation time (T2) was measured by the solid echo method in pulse NMR analysis. For the sample, the one cut from the tip of the blade rubber, and fined to a size of 1 mm×1 mm was prepared in an amount of 1 g in a test tube. The measurement conditions will be described below.

Device: JNM-MU25 (manufactured by JEOL)
Conditions: Solid echo method
Measurement Environment: 50°C
Number of measurements: 128

The measurement results were separated into two components (a soft segment and a hard segment) by the least squares method by in-device software, resulting in respective spin-spin relaxation times ($T2_L$, and $T2_S$).
In the present Example, this T2 relaxation curve is separated into two components depending on the length of the relaxation time. Specifically, the T2 relaxation curve was separated into two components by curve fitting to the following equation, thereby obtaining $T2_L$ and $T2_S$ through calculation:

[Math. 3]

$$M(t) = A_L \exp\left[-\left(\frac{t}{T2_L}\right)^{mi}\right] + A_S \exp\left[-\left(\frac{t}{T2_S}\right)^{mi}\right]$$

M(t): Macroscopic magnetization
$A_L$: intensity of a long relaxation time component (soft segment) at t=0
$T2_L$: T2 relaxation time of the long relaxation time component (soft segment)
As: intensity of the short relaxation time component (hard segment) at t=0
$T2_S$: T2 relaxation time of short relaxation time component (hard segment)
mi: Weibull coefficient
Measurement position: Samples were collected from positions of 1/8L, 1/2L, and 7/8L from one end side on the edge, where L represents the length of the tip side edge of the blade rubber. The arithmetic mean value thereof was adopted.

[Method for measuring peak intensity at 1415 cm$^{-1}$/peak intensity at 1538 cm$^{-1}$]

Measurement was performed using FT-IR. Samples were cut out from the tip of the blade rubber for use. The measurement conditions will be described below.

Device: FT/IR-4700 (manufactured by JASCO Corporation)
Measurement Mode: ATR method (crystal: diamond)
Integration number: 64
Measurement position: The samples were collected from positions of 1/8L, 1/2L, and 7/8L, where L represents the length of the tip side edge of the blade rubber, for measurement, and the arithmetic mean value was adopted.

[Method for measuring M2/M1]

Each M2/M1 was measured by a direct sample introduction method (DI method) in which samples were introduced directly into the ion source without passing through a gas chromatograph (GC).
For the device, POLARIS Q manufactured by ThermoFisher Scientific Co., Ltd., was used, and Direct Exposure Probe (DEP) was used.
When it is assumed that a line segment having a distance from the tip side edge of 0.5 mm is drawn to the tip surface of the blade rubber in parallel with the tip side edge, polyurethane was shaved off with a bio-cutter from points of 1/8L', 1/2L', and 7/8L' (referred to as P0, P1, and P2, respectively) from one end side on the line segment, where L' represents the length of the line segment. That is, samples were collected at three points from one tip side edge of the blade rubber.

A sample in an amount of 0.1 μg sampled at each of the P0', the P1', and the P2' was fixed to a filament located at the tip of the probe, and was inserted directly into the ionization chamber. Thereafter, rapid heating was performed from room temperature to 1000°C at a constant ramp rate (10°C/s), and the evaporated gas was detected by a mass spectrometer.

The detected amount M1 of all ions is assumed to be the sum of the integrated intensities of all peaks in the obtained total ion current thermogram. Also, M2/M1 was calculated, where M2 represents the integral intensity of the peak of the extracted ion thermogram corresponding to the m/z value derived from the polymeric MDI within the range of 380.5 to 381.5. Then, the arithmetic mean value of the numerical values obtained at each of the P0', the P1', and the P2' was assumed to be the value of M2/M1 in the present disclosure.

[Evaluation of contact uniformity (curved surface followability)]

Evaluation of the contact uniformity of the blade rubber was performed using the testing device for the wiping performance test described in the Japan Industrial Standard (JIS) D5710:1998 (automobile parts - wiper arm and wiper blade). Water droplets were applied by a spray onto the entire glass surface, which is the member to be cleaned, and the wipers were moved back and forth under the following conditions. Thereafter, the glass surface was visually confirmed and evaluated. Incidentally, the evaluation was performed by installation on the driver seat side of the Toyota WISH (model number: ZNE10G).

[Wiping conditions]
Wiping Environment: Temperature 20±5°C and humidity 70% or more
Wiper blade longitudinal length: 650 mm
Load to be applied to the wiper blade: 18 N/m.
Wiping reciprocating speed of the wiper blade: 55 times/min
Application of water: Water droplets are sprayed in a misty state over the entire surface of the glass

<Evaluation criteria>

Rank A: Almost the entire surface can be wiped.
Rank B: Less than 5 fine streaks remain, but disappear in several seconds.
Rank C: Fine streaks partially remain.
Rank D: Fine streaks remain on the entire surface.

[Durability Evaluation]

The blade rubber was reciprocated under the following conditions using the testing apparatus for the wiping performance testing described in the Japan Industrial Standard (JIS) D5710:1998 (automobile parts - wiper arm and wiper blade). After the round trip of 100,000 times, the contact uniformity (curved surface followability) evaluation was performed as described above to evaluate the durability.

[Test conditions]

Wiping Environment: Temperature 20±5°C
Wiper blade longitudinal length: 650 mm
Load to be applied to the wiper blade: 15 N/m.
Wiping reciprocating speed of the wiper blade: 45 times/min or more
Water spray: Uniform spray is performed over the entire surface of the glass. 800 mL/min or more

[Evaluation of scraping properties]

Using the testing device for the wiping performance test described in the Japan Industrial Standard (JIS) D5710:1998 (automobile parts-wiper arm and wiper blade), the scraping property of the blade rubber was evaluated. A saline solution (3% concentration) was applied to the entire glass surface, which is the member to be cleaned, by a spray, and moisture was sufficiently dried to form stuck dirt. Then, the wipers were operated back and forth under the following conditions. Thereafter, the glass surface was visually confirmed and evaluated.

[Wiping conditions]

    Wiping Environment: Temperature $20\pm5$°C and humidity 70% or more
    Wiper blade longitudinal length: 650 mm
    Load to be applied to the wiper blade: 18 N/m.
    Wiping reciprocating speed of the wiper blade: 55 times/min.

<Evaluation criteria>

    Rank A: Almost the entire surface is scraped off.
    Rank B: While a scraping residue is observed, the scraped area is 70% or more.
    Rank C: a scraping residue is partially observed (scraped area is 50% or more and less than 70%).
    Rank D: a scraping residue is observed over the entire surface (the scraped area is less than 50%).

<Examples 2 to 10 and Comparative Examples 1 to 7>

A prepolymer and a curing agent were obtained in the same manner as in Example 1, except that the materials and amounts of formulation were changed as shown in Table 1. The resulting wiper blades were evaluated in the same manner as in Example 1. The evaluation results are shown in Tables 1 and 2. Further, Fig. 3 shows a master curve showing the relationship of the storage elastic modulus (E') with respect to the measurement frequency obtained in the same manner as in Example 1 for the elastic member according to Comparative Example 1.
Details of the materials used except for those shown in Example 1 will be shown below.

    Polybutylene adipate polyester polyol with a number average molecular weight of 1000 (trade name: NIPPOLLAN 4009, manufactured by Tosoh Corporation) (hereinafter referred to as PBA1000)
    Polybutylene adipate polyester polyol with a number average molecular weight of 2000 (trade name: NIPPOLLAN 4010, manufactured by Tosoh Co.) (hereinafter referred to as PBA2000)
    Polyhexylene adipate polyester polyol having a number average molecular weight of 2600 (trade name: NIPPOLLAN 136, manufactured by Tosoh Corporation) (hereinafter referred to as PHA2600)
    Polyhexylene adipate polyester polyol having a number average molecular weight of 1000 (trade name: NIPPOLLAN 164, manufactured by Tosoh Corporation) (hereinafter referred to as PHA1000 below)
    Polytetramethylene ether glycol having a number average molecular weight of 1000 (trade name: PTG-1000SN, manufactured by Hodogaya Chemical Co., Ltd.) (hereinafter referred to as PTMG 1000)
    Polymeric MDI (trade name: Millionate MR-400, manufactured by Tosoh Corpoation) (hereinafter referred to as pMDI)
    1,4-butanediol (manufactured by Tokyo Chemical Industries Co., Ltd.) (hereinafter referred to as 1,4-BD)
    POLYCAT 46 (manufactured by Air Products Japan) (hereinafter referred to as PC46)
    TOYOCAT-RX5 (manufactured by Tosoh Corporation) (hereinafter referred to as RX5)
    TEDA (triethylenediamine) (manufactured by Tosoh Corporation)
    K-KAT XK-627 (manufactured by Kusumoto Chemicals Co., Ltd.)

[Table 1]

Table 1

| | | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|
| Formulation | Pre polymer | MDI | Mixing amount (g) | 325 | 330 | 340 | 330 | 345 | 327 | 327 | 326 | 395 | 394 |
| | | pMDI | Mixing amount (g) | 0 | 0 | 0 | 0 | 0 | 18 | 0 | 0 | 0 | 0 |
| | | Polyol | Kind | PBA 2500 | PBA 2500 | PBA 2000 | PBA 2500 | PBA 1000 | PBA 2500 | PHA 2600 | PBA 2500 | PTMG 1000 | PTMG 1000 |
| | | | Mixing amount (g) | 675 | 670 | 660 | 670 | 655 | 655 | 673 | 674 | 605 | 606 |
| | Curing agent | 1.4-BD | Mixing amount (g) | 0 | 0 | 0 | 0 | 0 | 0 | 0 | 0 | 0 | 0 |
| | | TMP | Mixing amount (g) | 89.0 | 64.8 | 84.6 | 77.6 | 57.3 | 90.5 | 84.3 | 84.0 | 76.0 | 75.8 |
| | | Polyol | Kind | - | PHA 1000 | - | PHA 1000 | - | - | - | - | - | PTMG 1000 |
| | | | Mixing amount (g) | 0 | 64.2 | 0 | 77.3 | 0 | 0 | 0 | 0 | 0 | 75.8 |
| | | No25 | Mixing amount (g) | 0.28 | 0.21 | 0.26 | 0.45 | 0.18 | 0.27 | 0.25 | 0.18 | 0.22 | 0.45 |
| | | PC46 | Mixing amount (g) | 0 | 0.04 | 0 | 0 | 0 | 0 | 0 | 0.02 | 0 | 0 |
| | | RX5 | Mixing amount (g) | 0 | 0 | 0 | 0 | 0 | 0 | 0 | 0 | 0 | 0 |
| | | TEDA | Mixing amount (g) | 0 | 0 | 0 | 0 | 0 | 0 | 0 | 0 | 0 | 0 |
| | | K-KAT | Mixing amount (g) | 0 | 0 | 0 | 0 | 0 | 0 | 0 | 0 | 0 | 0 |
| | Crosslinking agent concentration | | mmol/g | 0.61 | 0.43 | 0.58 | 0.50 | 0.40 | 0.61 | 0.58 | 0.58 | 0.53 | 0.49 |

(continued)

| | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Storage elastic modulus | E'(1) | Mpa | 16.4 | 17.3 | 17.6 | 12.7 | 13.0 | 17.2 | 15.2 | 17.3 | 17.8 | 13.0 |
| | E'(2) | Mpa | 1088 | 552 | 1452 | 563 | 1350 | 1208 | 985 | 1128 | 1022 | 756 |
| Pulse NMR | T2L | $\mu$s | 296 | 313 | 254 | 310 | 268 | 280 | 295 | 280 | 278 | 300 |
| | T2S | $\mu$s | 54.3 | 52.1 | 55.5 | 59.2 | 67.5 | 53.1 | 55.3 | 53.9 | 64.2 | 83.8 |
| IR | 1415cm-1/ 1538cm-1 | - | 0.56 | 0.63 | 0.56 | 0.57 | 0.54 | 0.55 | 0.56 | 0.63 | 0.57 | 0.56 |
| MS | M2/M1 | - | 0 | 0 | 0 | 0 | 0 | 0.0008 | 0 | 0 | 0 | 0 |
| Evaluation | Curved surface followability evaluation | | A | A | A | A | A | A | A | A | A | A |
| | Scraping property evaluation | | A | B | A | B | A | A | A | A | A | A |
| | Durability evaluation | | A | A | A | A | A | A | A | A | A | A |

In the Table, "Ex." indicates "Example".

[Table 2]

Table 2

| | | | | C.E. 1 | C.E. 2 | C.E. 3 | C.E. 4 | C.E. 5 | C.E. 6 | C.E. 7 |
|---|---|---|---|---|---|---|---|---|---|---|
| Formulation | Pre polymer | MDI | Mixing amount (g) | 188 | 363 | 286 | 327 | 305 | 343 | 188 |
| | | pMDI | Mixing amount (g) | 210 | 0 | 0 | 0 | 0 | 0 | 210 |
| | | Polyol | Kind | PBA 2500 | PBA 2000 | PBA 2000 | PBA 2500 | PBA 2500 | PBA 1000 | PBA 2500 |
| | | | Mixing amount (g) | 602 | 637 | 714 | 673 | 695 | 657 | 602 |
| | Curing agent | 1.4-BD | Mixing amount (g) | 0 | 0 | 0 | 12.9 | 0 | 0 | 0 |
| | | TMP | Mixing amount (g) | 58.0 | 91.1 | 20.4 | 23.7 | 70.4 | 46.1 | 58.0 |
| | | Polyol | Kind | PHA 1000 | - | - | PHA 1000 | PHA 1000 | - | PHA 1000 |
| | | | Mixing amount (g) | 329 | 0 | 0 | 168 | 70.4 | 0 | 329 |
| | | No25 | Mixing amount (g) | 0 | 0.27 | 0 | 0.35 | 0.42 | 0.17 | 0.53 |
| | | PC46 | Mixing amount (g) | 0.04 | 0 | 0 | 0.08 | 0 | 0 | 0.17 |
| | | RX5 | Mixing amount (g) | 1.35 | 0 | 0 | 0 | 0 | 0 | 0 |
| | | TEDA | Mixing amount (g) | 0 | 0 | 0.10 | 0 | 0 | 0 | 0 |
| | | K-KAT | Mixing amount (g) | 0 | 0 | 0.20 | 0 | 0 | 0 | 0 |
| | Crosslinking agent concentration | | mmol/g | 0.29 | 0.62 | 0.15 | 0.15 | 0.46 | 0.32 | 0.29 |
| Storage elastic modulus | E'(1) | | Mpa | 26.5 | 19.0 | 19.3 | 14.0 | 11.1 | 11.3 | 20.4 |
| | E'(2) | | Mpa | 542 | 1435 | 346 | 368 | 532 | 1286 | 546 |

(continued)

| | | | C.E. 1 | C.E. 2 | C.E. 3 | C.E. 4 | C.E. 5 | C.E. 6 | C.E. 7 |
|---|---|---|---|---|---|---|---|---|---|
| Pulse NMR | T2L | μs | 374 | 255 | 352 | 334 | 342 | 270 | 327 |
| | T2S | μs | 30.9 | 42.8 | 33.5 | 49.1 | 63.3 | 90.5 | 52.1 |
| IR | 1415cm-1/ 1538cm-1 | - | 0.74 | 0.56 | 0.61 | 0.80 | 0.55 | 0.56 | 0.64 |
| MS | M2/M1 | - | 0.0120 | 0.0000 | 0.0000 | 0.0000 | 0.0000 | 0.0000 | 0.0120 |
| Evaluation | Curved surface followability evaluation | | C | C | C | A | A | A | C |
| | Scraping property evaluation | | C | C | D | D | C | C | C |
| | Durability evaluation | | C | C | C | B | B | B | C |

In the Table, "C.E. " indicates "Comparative Example".

The present disclosure is not limited to the above embodiments, and various changes and modifications can be made without departing from the spirit and scope of the present disclosure. Accordingly, the following claims are appended to make the scope of the present disclosure public.

The present application claims priority based on Japanese Patent Application No. 2022-193728 filed on December 2, 2022 and Japanese Patent Application No. 2023-147538 filed on September 12, 2023, the entire contents of which are incorporated herein by reference.

## Claims

1. A blade rubber comprising an elastic member comprising polyurethane, the blade rubber that brings a part of the elastic member into contact with a surface of a member to be cleaned, and cleans the surface of the member to be cleaned, wherein

   in environment of a temperature of 8°C, when it is assumed that $E'(1)$ represents a storage elastic modulus at a vibration frequency of $1 \times 10^{-3}$ Hz and $E'(2)$ represents a storage elastic modulus at a vibration frequency of $1 \times 10^4$ Hz, of the blade rubber,
   $E'(1)$ is 12.0 to 18.0 MPa, and
   $E'(2)$ is 530 to 1500 MPa.

2. The blade rubber according to claim 1, wherein

   the polyurethane is a polyurethane elastomer comprising a hard segment and a soft segment, and
   in pulse NMR measurement in 50°C environment, a spin-spin relaxation time ($T2_L$) of the soft segment upon separation into two components of the hard segment and the soft segment is 250 to 320 μs.

3. The blade rubber according to claim 1 or 2, wherein a value of a ratio of a peak intensity at $1415$ cm$^{-1}$ to a peak intensity at $1538$ cm$^{-1}$ in FT-IR measurement of the blade rubber using diamond as an ATR crystal is 0.50 to 0.65.

4. The blade rubber according to any one of claims 1 to 3, wherein the blade rubber has a plate shape having a main surface facing the member to be cleaned and a tip surface forming a tip side edge with the main surface at least on a tip side of the blade rubber, and

   when it is assumed that a line segment having a distance of 0.5 mm from the tip side edge is drawn on the tip surface in parallel with the tip side edge,
   M2/M1 is less than 0.0010, where
   M1 represents a detection amount of all ions obtained when heated at a ramp rate of 10 °C/s up to 1000°C by using a direct sample introduction type mass spectrometer that heats and vaporizes samples sampled in each of P0', P1' and P2' in an ionization chamber and ionizes sample molecules,
   with the line segment having a length of L' and
   with the P0', the P1', and the P2' representing points of 1/8L', 1/2L', and 7/8L' from one end side on the line segment, respectively, and
M2 represents an integral intensity of a peak of an extracted ion thermogram corresponding to a m/z value derived from a polymeric MDI within a range of 380.5 to 381.5.

5. A wiper blade, wherein

   the wiper blade comprises a blade rubber and a support member that supports the blade rubber, and
   the blade rubber is the blade rubber according to any one of claims 1 to 4.

6. A wiper device, wherein

   the wiper device comprises a wiper arm and a wiper blade mounted on the wiper arm, and
   the wiper blade is the wiper blade according to claim 5.

7. An urethane molded body comprising polyurethane, wherein

   in environment of a temperature of 8°C, when E'(1) represents a storage elastic modulus at a vibration frequency of $1 \times 10^{-3}$ Hz and E'(2) represents a storage elastic modulus at a vibration frequency of $1 \times 10^{4}$ Hz, of the urethan molded body,
   E'(1) is 12.0 to 18.0 MPa, and
   E'(2) is 530 to 1500 MPa.

Fig. 1

Fig. 2

Fig. 3

## INTERNATIONAL SEARCH REPORT

| International application No. |
|---|
| **PCT/JP2023/042839** |

**A. CLASSIFICATION OF SUBJECT MATTER**

***B60S 1/38***(2006.01)i; ***B60S 1/62***(2006.01)i; ***C08G 18/00***(2006.01)i; ***C08G 18/65***(2006.01)i; ***C08J 5/00***(2006.01)i
FI: B60S1/38 B; B60S1/62 120A; C08G18/00 Z; C08G18/65 011; C08J5/00 CFF

According to International Patent Classification (IPC) or to both national classification and IPC

**B. FIELDS SEARCHED**

Minimum documentation searched (classification system followed by classification symbols)

B60S1/00; C08G18/00; C08J5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-94382 A (SANYO CHEMICAL IND LTD) 20 June 2019 (2019-06-20) | 1-7 |
| A | JP 2018-16699 A (TORAY INDUSTRIES) 01 February 2018 (2018-02-01) | 1-7 |
| A | WO 2018/030084 A1 (ASMO CO., LTD.) 15 February 2018 (2018-02-15) | 1-7 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2023/042839**

| Patent document cited in search report | | | Publication date (day/month/year) | Patent family member(s) | Publication date (day/month/year) |
|---|---|---|---|---|---|
| JP | 2019-94382 | A | 20 June 2019 | (Family: none) | |
| JP | 2018-16699 | A | 01 February 2018 | (Family: none) | |
| WO | 2018/030084 | A1 | 15 February 2018 | (Family: none) | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004017948 A
- JP 2019094382 A
- JP 2022193728 A
- JP 2023147538 A